# EUROPÄISCHE PATENTSCHRIFT

(11) **EP 3 788 756 B1**
(45) Veröffentlichungstag und Bekanntmachung des Hinweises auf die Patenterteilung: **01.03.2023**
(21) Anmeldenummer: 19720802.8
(22) Anmeldetag: 18.04.2019
(51) Int. Cl.: H04L 69/08, H04L 69/18, H04L 67/12, H04L 67/565

(54) **GATEWAY ZUR DATENKOMMUNIKATION IN EINEM FAHRZEUG**
GATEWAY FOR DATA COMMUNICATION IN A VEHICLE
PASSERELLE DE COMMUNICATION DE DONNÉES DANS UN VÉHICULE

(30) Priorität: 04.05.2018 DE 102018206934
(43) Veröffentlichungstag der Anmeldung: 10.03.2021
(73) Patentinhaber: Continental Automotive Technologies GmbH, 30165 Hannover (DE)
(72) Erfinder: ARNDT, Christoph, 65824 Schwalbach a. Ts. (DE); BRUNNER, Stefan, 65824 Schwalbach a. Ts. (DE); ZINNER, Helge, 65824 Schwalbach a. Ts. (DE)
(74) Vertreter: Continental Corporation
(86) Internationale Anmeldenummer: PCT/EP2019/060127
(87) Internationale Veröffentlichungsnummer: WO 2019/211103

(56) Entgegenhaltungen:
- KR-A- 20080 013 583
- US-A1- 2011 299 410
- US-A1- 2017 072 876
- US-B2- 7 406 088

## Beschreibung

Die Erfindung betrifft ein Gateway, das Daten von einer Kommunikationsschnittstelle, die ein erstes Kommunikationsprotokoll verwendet, zu einer Kommunikationsschnittstelle, die ein zweites Kommunikationsprotokoll verwendet, überträgt.

Für die Datenkommunikation in Fahrzeugen kommen heutzutage verschiedene Standards und Protokolle zur Anwendung. Beispielsweise werden von Sensoren erfasste Daten über den Controller Area Network (CAN)-Bus gesendet, Multimediadaten über einen Media Oriented Systems Transport (MOST)-Bus, Local Internet Connect (LIN)-Bus für die Kommunikation von Aktoren und Sensoren und FlexRay für den Datenaustausch in sicherheitskritischen Anwendungen. Inzwischen findet aber auch der Ethernet-Standard immer mehr Bedeutung in den Bordenetzen der Automobile. Mit zunehmender Anforderung an die Elektrifizierung der Fahrzeuge und der damit einhergehenden Ablösung der Mechanik steigen die Anforderungen der elektrischen Systeme hinsichtlich Determinismus und Güte. Kommunikationssysteme müssen den wachsenden Ansprüchen nach Sicherheit, Zuverlässigkeit und Komfort noch mehr denn je gerecht werden.

Gerade im Hinblick auf einen immer stärker werdenden Einsatz der Protokolle Ethernet und Internet Protocol (IP) wird die Verbindung zur Außenwelt immer wichtiger. Daten werden vom Fahrzeug zu Datencentern, anderen Fahrzeugen und Empfangseinheiten entlang der Straße oder entfernt übertragen, und umgekehrt werden Daten von Datencentern, Dienstleistern, Sendeeinheiten entlang der Straße oder anderen Fahrzeugen in das Fahrzeug gesendet. Aber auch die Aktualisierung von Software nach der Auslieferung oder bei Bedarf, z.B. für Sicherheitsupdates, sollten nach Möglichkeit sofort durchgeführt werden, und dazu bietet es sich an, dies entweder vom Kunden selbst oder über Funksysteme durchzuführen.

Innerhalb von Fahrzeugen erzeugen Sensoren wie z.B. Kameras, Kollisionsvermeidungssysteme, Komfort- und Infotainment Daten, die nach innen und nach außen kommuniziert werden.

Ein Standard für eine Schnittstelle zur Außenwelt und für Anwendungen im Fahrzeug ist der Universal Serial Bus Standard (USB). Typische Kommunikationschips verfügen nur über das Bussystem USB - was ausreichend schnell ist aber im Hinblick auf zukünftige Vernetzungsanforderungen nicht ausreicht. USB ist allerdings als Bussystem im Fahrzeug nur bedingt geeignet.

KR 2008 0013583 A (INSPRIT CO LTD [KR]) 13. Februar 2008 (2008-02-13) offenbart die Umsetzung von Kommunikationsprotokollen zwischen verschiedenen Schnittstellen über ein in einem Fahrzeug angeordnetes Gateway.

Aufgabe der Erfindung ist es, die Vernetzung von Fahrzeugen zu verbessern. Die Aufgabe wird gelöst durch ein Gateway gemäß Anspruch 1, ein Fahrzeug, das ein solches Gateway aufweist, sowie ein Verfahren, ein Programmelement und ein computerlesbares Medium nach einem nebengeordneten Anspruch.

Gemäß einem Ausführungsbeispiel wird ein Gateway zur Datenkommunikation in einem Fahrzeug bereitgestellt, aufweisend eine erste Kommunikationsschnittstelle, die ein erstes Kommunikationsprotokoll verwendet und eine zweite Kommunikationsschnittstelle, die ein zweites Kommunikationsprotokoll verwendet, wobei das Gateway konfiguriert ist, Daten von der ersten zur zweiten Kommunikationsschnittstelle zu übertragen und Daten von der zweiten Kommunikationsschnittstelle zur ersten Kommunikationsschnittstelle zu übertragen, und wobei das Gateway einen Mediakonverter zum Umsetzen von Dienstgüteinformationen vom ersten in das zweite Kommunikationsprotokoll und vom zweiten in das erste Kommunikationsprotokoll umfasst.

Der Umsetzer ist zum Beispiel ein Mediakonverter, der die Dienstgüte in beide Richtungen überträgt. Information bezüglich der Priorität von übertragenen Paketen, also die Dienstgüte, bleibt somit erhalten. Die Dienstgüte kann vom jeweiligen Standard ausgelesen werden und nach einer Vorschrift in eine entsprechende Dienstgüte des jeweils anderen Standards übersetzt werden.

Vorteilhafterweise kann hierdurch ein Übergang zwischen USB und einer Technologie hergestellt, welche die hohe Datenrate von USB übertragen kann und welche Zusatzfunktionen anbieten kann um fähig für künftige Funktionen und Software Downloads zu sein.

Gemäß einem Ausführungsbeispiel umfasst das Gateway weiterhin eine Zeitsynchronisationsschaltung (105, 106), eingerichtet zur Umsetzung einer Zeitsynchronisation vom ersten Kommunikationsprotokoll auf das zweite Kommunikationsprotokoll.

Die meisten Feldbusse im Fahrzeug arbeiten zeitgesteuert. Das Synchronisationsgateway ermöglicht die Übertragung von Zeitinformationen, sowie synchronisierte Abläufe und Regelmechanismen insbesondere im Hinblick auf das automatisierte Fahren. Eine synchronisierte Zeitbasis stellt eine wichtige Grundlage für eine vorhersagbare Kommunikation dar. Der Bedarf zur Schaffung einer busübergreifenden Zeitsynchronisation zwischen USB und Ethernet steht verstärkt durch Anforderungen nach Car2X & Software Downloads, also auch das automatisierte Fahren und die Synchronisation zu beispielsweise GPS, Galileo und Glonass.

Gemäß einem Ausführungsbeispiel wird die Zeitsynchronisationsschaltung eingerichtet, einen Übertragungstakt des ersten Kommunikationsprotokolls mit einem Übertragungstakt des zweiten Kommunikationsprotokolls zu synchronisieren. Hierdurch können auch die Datenrahmen, die gemäß dem jeweiligen Übertragungsprotokoll mehrere Datenpakete umfassen, synchronisiert werden.

Erfindungsgemäß beinhaltet das erste Kommunikationsprotokoll eine zeitliche Zuordnung von Daten mittels Zeitmarken und das Gateway ist eingerichtet, die Zeitmarken bei der Umsetzung der Daten vom ersten Kommunikationsprotokoll in das zweite Kommunikationsprotokoll den umgesetzten Daten zuzuweisen. Somit bleiben die Zeitmarken, die eine absolute Zeit, die den Datenrahmen zugeordnet sind, erhalten.

Gemäß einem Ausführungsbeispiel ist die Schnittstelle konfiguriert, Daten in Datenpakete zusammenzufassen und die zweite Schnittstelle ist eingerichtet, die Datenpakete zu empfangen und zu einer weiteren Schnittstelle des ersten Kommunikationsstandards zu tunneln, und wobei das Gateway konfiguriert ist, die Laufzeit der Daten zu messen. Die Laufzeitmessung wird benötigt, wenn Pakete durch das System getunnelt werden, da z.B. die

Echtzeitanforderungen überprüft und eingehalten werden müssen. Die Laufzeit kann weiterhin von den Anwendungen ausgewertet und verarbeitet werden, wie zum Beispiel Anwendungen, bei denen Messungen in von der Zeit abhängige Funktionen eingehen oder Anwendungen, die eine Synchronisation voraussetzen.

Erfindungsgemäß ist das Kommunikationsprotokoll der ersten Kommunikationsschnittstelle USB und das Kommunikationsprotokoll der zweiten Kommunikationsschnittstelle entspricht einem Ethernet-Standard für die Fahrzeugtechnologie.

Der Ethernet-Standard für Fahrzeugtechnologie unterscheidet sich von der dem Ethernet-Standard in der Informationstechnologie aufgrund besonderer Anforderungen im Fahrzeug auf der physikalischen Ebene. Ein Ethernet-Standard auf der physikalischen Ebene ist zum Beispiel die BroadR-Reach-Technologie, bei der mehrere Fahrzeugbordsysteme über ungeschirmte Twisted-Pair-Kabel gleichzeitig auf Informationen zugreifen können. Durch BroadR-Reach können Anwendungen wie z.B. 360-Grad-Rundumsicht-Einparkhilfe, Rückfahrkameras, Kollisionsvermeidungssysteme, Komfort- und Infotainment-Lösungen etc. mittels Twisted-Pair-Kabel in ein offenes und skalierbares Ethernet-Netzwerk eingebunden werden. 100Base-T1 ist eine Ethernet-Schnittstelle für eine Datenrate von 100 Mbit/s, die auf BroadR-Reach basiert. Die Datenkommunikation erfolgt über ein einfaches, ungeschirmtes Adernpaar (unshielded twisted pair, UTP) in Vollduplex. Auf Media-Access Control (MAC)-Level wird hingegen das Ethernet-Frame-Format beibehalten.

Ein weiteres Beispiel mit USB sind Antennen-Module, die Kommunikationschips (Network Access Devices, NAD genannt) enthalten, die typischerweise USB als schnelle Kommunikationsschnittstellen aufweisen, die jedoch keine Netzwerkschnittstelle aufweisen. Diese lassen sich durch das erfindungsgemäße Gateway an das Netzwerk anbinden, um z.B. Software Updates in das Ethernet-Backbone des Fahrzeugs zu laden.

Sowohl der USB-Standard als der Ethernet-Standard bieten die Eigenschaften einer Zeitinformation in Form von Zeitmarken und einer zeitlichen Struktur, die sich aufeinander synchronisieren und übertragen lassen wie auch Dienstgüteinformationen, die sich aufeinander abbilden lassen. Der Takt auf die Zeitsynchronisation von Ethernet einzustellen und synchron zu halten.

Gemäß einem Ausführungsbeispiel, welches nicht Teil der Erfindung ist, weist das Gateway weiter auf:
eine Energieversorgungsanalyseschaltung, eingerichtet zum Analysieren der vom Gateway zur Verfügung zu stellenden Versorgungsspannung der an das Gateway angeschlossenen USB-Komponenten. Die Energieversorgungsanalyseschaltung ermöglicht es, zu unterscheiden, ob das System als USB Host fungieren soll, und daher die Energie für angeschlossene Komponenten zur Verfügung stellt, oder ob das System an einem anderen Host angeschlossen ist. Die Energieversorgungsanalyseschaltung kann weiterhin die Strom- und Spannungswerte für die angeschlossenen USB-Geräte, z.B. mittels der USB-Konfiguration und übertragenen Informationen aus dem Ethernet ermitteln und die Energie zur Verfügung stellen.

Gemäß einem Ausführungsbeispiel, welches nicht Teil der Erfindung ist, können an das Gateway Komponenten angeschlossen sein, die sich in einem Stromsparmodus befinden und das Gateway weist weiter eine Teilnetzwerksteuereinheit zum Aktivieren von sich in dem Stromsparmodus befindlichen Komponenten auf. Somit ist es möglich, das System aus Gateway und den angeschlossenen Geräten bei Partial-Networking zu betreiben, d.h. das System kann, bzw. Teile davon können in einen Stromsparmodus versetzt werden und aufgeweckt werden, wenn sie wieder benötigt werden. Die Funktionalität des Aufweckrufes ("Wake up Call") besteht auch für angeschlossene Geräte, d.h. das System kann angeschlossene Komponenten aus dem Stromsparmodus aufwecken.

Gemäß einem Ausführungsbeispiel wird ein Fahrzeug bereitgestellt, das ein oben beschriebenes Gateway aufweist.

Gemäß einem Ausführungsbeispiel wird ein Verfahren zur Datenkommunikation in einem Fahrzeug gemäß Anspruch 6 bereitgestellt.

Gemäß einem Ausführungsbeispiel wird weiterhin ein Programmelement gemäß Anspruch 7 bereitgestellt, das, wenn es auf einem Prozessor eines Gateways ausgeführt wird, das Gateway anleitet, die oben und im Folgenden beschriebenen Schritte durchzuführen.

Gemäß einem Ausführungsbeispiel wird weiterhin ein computerlesbares Medium gemäß Anspruch 8 bereitgestellt, auf dem ein derartiges Programmelement gespeichert ist.

Ausführungsbeispiele der Erfindung werden im Folgenden anhand der Figuren beschrieben.
Figur 1 zeigt eine Anordnung gemäß einem Ausführungsbeispiel.
Figur 2 zeigt ein Gateway gemäß einem Ausführungsbeispiel.
Figur 3 zeigt eine Dienstgütezuordnung gemäß einem Ausführungsbeispiel.
Figur 4 zeigt ein Verfahren zur Dienstgütezuordnung gemäß einem Ausführungsbeispiel.
Figur 5 zeigt ein weiteres Verfahren zur Dienstgütezuordnung gemäß einem Ausführungsbeispiel.
Figur 6 zeigt ein Blockschaltbild der Zeitsynchronisation gemäß einem Ausführungsbeispiel.
Figur 7 zeigt ein Diagramm der Zeitsynchronisation gemäß einem Ausführungsbeispiel.
Figur 8 zeigt ein Diagramm zur Aushandlung der Energieklasse gemäß einem Ausführungsbeispiel.
Figur 9 zeigt ein Diagramm zur Überwachung der Spannungsversorgung gemäß einem Ausführungsbeispiel.
Figur 10 zeigt ein Blockschaltbild der bidirektionalen Spannungsversorgung gemäß einem Ausführungsbeispiel.
Figur 11 zeigt ein Fahrzeug gemäß einem Ausführungsbeispiel.

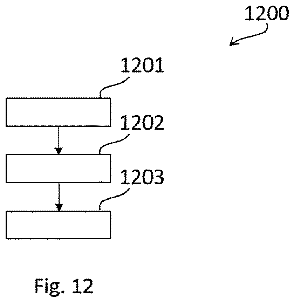

Figur 12 zeigt eine Methode gemäß einem Ausführungsbeispiel.

Für die Datenkommunikation in Fahrzeugen kommen verschiedene Standards und Protokolle zur Anwendung. Beispielsweise werden von Sensoren erfasste Daten über den CAN-Bus gesendet, Multimediadaten über einen MOST-Bus. Inzwischen findet aber auch der Ethernet-Standard immer mehr Bedeutung in den Bordenetzen der Automobile.

Die Übertragung von Versorgungsspannung erfolgt über das UTP-Kabel gemäß dem IEEE-802.3bu Standard "Power over Data Lines (PoDL)". Bei diesem Verfahren werden Kfz-Komponenten über Datenleitungen mit Versorgungsspannung bei minimalen Interferenzen zwischen den Daten und der Versorgungsspannung versorgt. Um dies zu Nutzen, müssen Endgeräte bzw. Anwendungen kompatibel zu PoDL sein, so dass ein spezielles Gerät, das Power Sourcing Equipment im Netzwerk die Geräte ermitteln kann, die Strom benötigen. Diese werden dann Powered Devices (PD genannt) .

Eine technische Herausforderung der elektrisch-elektronischen (E-E) /Architekturen der kommenden Jahre werden die zunehmenden Kommunikationsschnittstellen wie LTE, 5G und die daraus resultierenden Datenraten darstellen, die unter anderem auch über die Connectivity Unit, eine angepasste Hardware, die die Verbindung zwischen den Steuereinheiten im Fahrzeug und einem Datencenter herstellt, Antennenmodul zur Herstellung eines Netzwerkzugriffes mit einem Netzzugriffsgerät (Network Access Device, NAD) oder auch connectivity Gateway ins Auto finden werden.

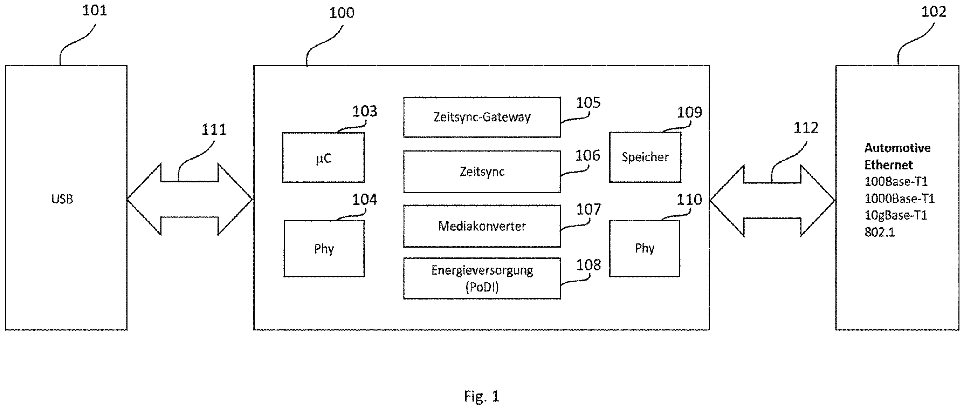

Fig. 1 zeigt eine Anordnung gemäß einem Ausführungsbeispiel mit einem Gateway 100 zur Datenkommunikation in einem Fahrzeug, einer Schnittstelle 111 zu einem ersten Kommunikationsstandard 101 und einer Schnittstelle 112 zu einem zweiten Kommunikationsstandard 102. Der erste Kommunikationsstandard ist z.B. der USB-Standard, der zweite Kommunikationsstandard ist ein Standard, der spezifisch für die Fahrzeugtechnologie erstellt worden ist, wie z.B. der Ethernet-Standard BroadR-Reach mit einer physikalischen Ebene gemäß 100Base-T1. Als weitere Protokolle neben BroadR-Reach (100Base-T1) der IEEE-Arbeitsgruppe 802.3bw gibt es z.B. 1000Base-T1 der Arbeitsgruppe IEEE 802.3bp, und es gibt bereits Bestrebungen, noch höhere Geschwindigkeiten für Automotive Ethernet zu standardisieren. Automotive Etherneteignet sich daher hervorragend zur Übertragung von hohen Datenmengen wie beispielsweise unkomprimierte Sensordaten und Flashdaten, also Daten, die in den Flash-Speicher von Steuergeräten geschrieben werden.

Die Media Access Control (MAC) -Ebene bzw. der Netzwerkzugang kann z.B. gemäß der IEEE802.1 spezifiziert sein. Insbesondere spezifiziert der IEEE802.1P Standard die Dienstgüteklassen und der IEEE802.1Q das sogenannten "Virtual Local Area Network (VLAN) tagging", bei dem die Dienstgüte in den Ethernet-Datenrahmen eingefügt wird.

Der Mikrocontroller 103 in Fig. 1 steuert die Abläufe innerhalb des Gateways. Die physikalischen Schnittstellen zum jeweiligen Standard bilden die Module 104 und 105. Der Mediakonverter 107 bietet die Funktionalität einer Dienstgüte-Übertragung von USB nach Ethernet und umgekehrt. Die Dienstgüte bei Ethernet lässt sich durch die 802.1Q Priorität bestimmen und bei USB über den Transfer Typ. Die Dienstgüteinformation des jeweiligen Kommunikationsprotokolls wird aus den Datenrahmen ausgelesen, umgesetzt und in die Datenrahmen des jeweilig anderen Kommunikationsprotokolls eingefügt. Das Zeitsynchronisations-Gateway 105 überträgt die echtzeitkritischen (z.B. Zeitsynchronisation) Daten. Die Dienstgüteinformation bleibt erhalten. Die Zeitsynchronisation im Modul 106 garantiert die Ausführung verteilter Prozesse werden kann. Eine busübergreifende Zeitsynchronisation zwischen USB und Ethernet erlaubt, Software Downloads und den Anforderungen gemäß dem Car2X-Protokoll gerecht zu werden und stellt somit auch die Voraussetzungen für das automatisierte Fahren und die Synchronisation zu beispielsweise GPS zur Verfügung. Durch diese Umsetzung wird die zeitliche Synchronizität von Anwendungen im Fahrzeug von Ethernet und USB gewährleistet. Das Energieversorgungsmodul 108 sorgt für die Stromversorgung der angeschlossenen Module über die Datenleitungen. Außerdem erkennt für USB die bereitzustellende Ausgangsspannung sowie die maximal zulässige Stromaufnahme des USB Gerät. Ein Speicher 109 dient der Pufferung der Daten.

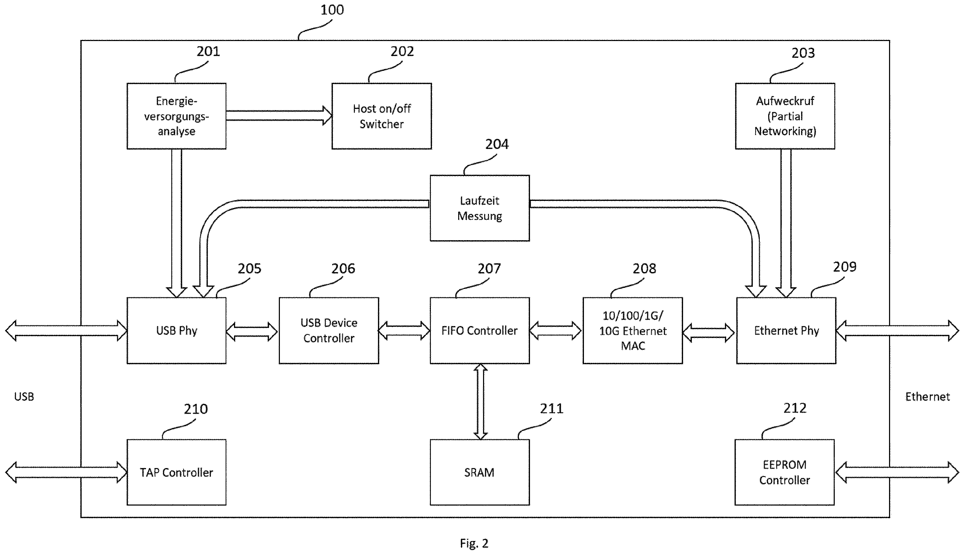

Fig. 2 zeigt ein typisches Gateway gemäß einem Ausführungsbeispiel, das zusätzliche Module aufweist. Ein typisches Gateway zur Umsetzung von USB nach Ethernet und umgekehrt umfasst die physische Schnittstelle 205, auf deren Leitungen die Daten empfangen bzw. gesendet werden und die physikalische Eigenschaften der Daten gewährleistet. Eine USB-Gerätesteuerung 206 ist für den USB-Zugriff der verbundenen USB-Geräte verantwortlich und schreibt die umzusetzenden Daten über eine "First In First Out" (FIFO) -Steuerung in einen zugehöriger Static Random Access (SRAM)-Speicher 211 zum Puffern der Daten. Die Daten werden dann wieder über die FIFO-Steuerung von einem 10/100/1G/10G Ethernet MAC-Modul herausgeholt werden, das den Zugriff der verbundenen Ethernet-Geräte steuert. Die physikalische Ethernet-Schnittstelle 209 gewährleistet schließlich die physikalischen Eigenschaften der Daten an der Schnittstelle.

Der Datenfluss von der Ethernet-Schnittstelle zur USB-Schnittstelle erfolgt in entsprechender Weise. Das Gateway umfasst weiterhin einen Test Access Point (TAP) Controller 210, der dem Programmieren und Testen der Hardware dient. Ein EEPROM-Controller 212 mit einer Schnittstelle nach außen enthält z.B. Konfigurationsdaten für die Hard- bzw. Firmware des Gateway 100. Zusätzlich zu den typischen Modulen enthält das Gateway gemäß einem Ausführungsbeispiel eine Laufzeitmessung für die Laufzeit der Daten von der physikalischen Schnittstelle 205 zur physikalischen Schnittstelle des Ethernet 209 bzw. der umgekehrten Richtung. Ein weiteres zusätzliches Modul beinhaltet die Energieversorgungsanalyse 201, die zum einen analysiert, ob ein verbundenes USB-Gerät als Client oder als Host konfiguriert ist und welcher Energieklasse es zugeordnet ist, um mittels des Host on/off Schalters 202 keine oder eine entsprechende Energie zur Verfügung zu stellen.

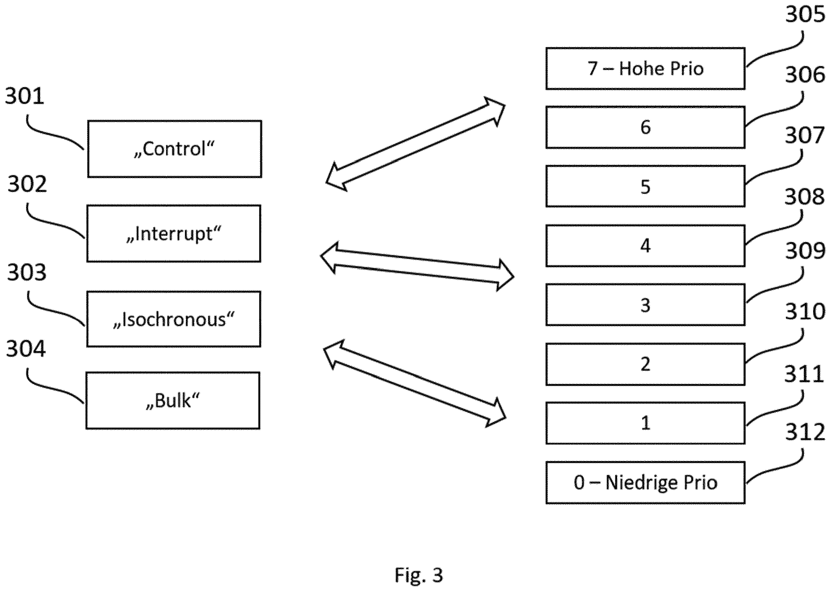

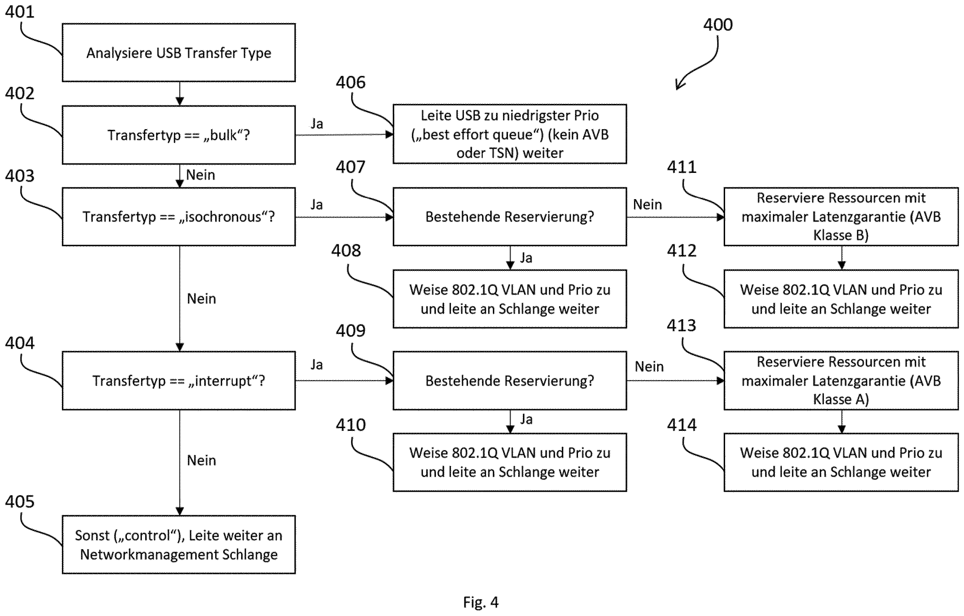

Fig. 3 zeigt eine prinzipielle Darstellung einer Dienstgütezuordnung gemäß einem Ausführungsbeispiel, bei der die IEEE802.1Q Klasse (Audio Video Bridging / Time Sensitive Networking; AVB/TSN) und die Internet Protocol - Type of Service (IP-TOS)-Klasse dem USB Transfer-Typ zugeordnet wird. Die linke Spalte in Fig. 4 stellt die USB Transfer-Typen Steuerung ("Control") 301, Interrupt 302, Isochron ("isochronous") und Masse ("bulk") dar. Die rechte Spalte in Fig. 4 stellt die Ethernet-Prioritäten dar, wobei "7" 305 die höchste Priorität hat und schrittweise bis zur niedrigsten Priorität "0" 312 abgestuft ist. Ein Algorithmus hierfür wird in Fig. 4 präsentiert.

Fig. 4 zeigt ein Verfahren gemäß einem Ausführungsbeispiel, bei dem die USB-Dienstgüte der Ethernet-Dienstgüte zugeordnet wird. In 401 wird der Prozess zur Analyse des USB Transfer Typs gestartet. In 402 wird geprüft, ob der Typ "bulk" ist. Wenn ja, werden in 406 die USB-Datenpakete in die niedrigste Prioritätsklasse, der sogenannten "best effort"-Warteschlange (kein AVB oder TSN) geleitet. Wenn der Typ "bulk" nicht erkannt worden ist, wird in 403 geprüft, ob der Typ "isochronous" ist. Wenn ja wird geprüft, ob eine Ressourcen-Reservierung bereits besteht. Wenn ja, werden den Datenpaketen eine 802.1Q VLAN-Priorität zugewiesen und zu den entsprechenden Schlangen weitergeleitet. Wenn keine Ressourcen-Reservierung besteht, werden in 411 Ressourcen mit maximaler Latenzgarantie (AVB dass B) zugewiesen und anschließend in 412 eine 802.1Q VLAN Priorität zugewiesen und zu den entsprechenden Schlangen weitergeleitet. Wird in 403 der Typ "isochronous" nicht festgestellt, wird in 404 der Typ "interrupt" geprüft. Ist der Typ "interrupt", wird geprüft, ob eine Reservierung besteht. Wenn ja, werden in 410 den Datenpaketen eine 802.1Q VLAN Priorität zugewiesen und zu den entsprechenden Schlangen weitergeleitet. Wenn nein, werden in 413 Ressourcen mit maximaler Latenzgarantie (AVB Klasse A) reserviert und anschließend in 414 die Datenpakete einer 802.1Q VLAN Priorität zugewiesen und zu den entsprechenden Schlangen weitergeleitet. Wird in 404 festgestellt, dass der Typ nicht "interrupt" ist, ist der Typ "control" und die Datenpakete werden in 405 an die Netzwerk Management Schlange weitergeleitet.

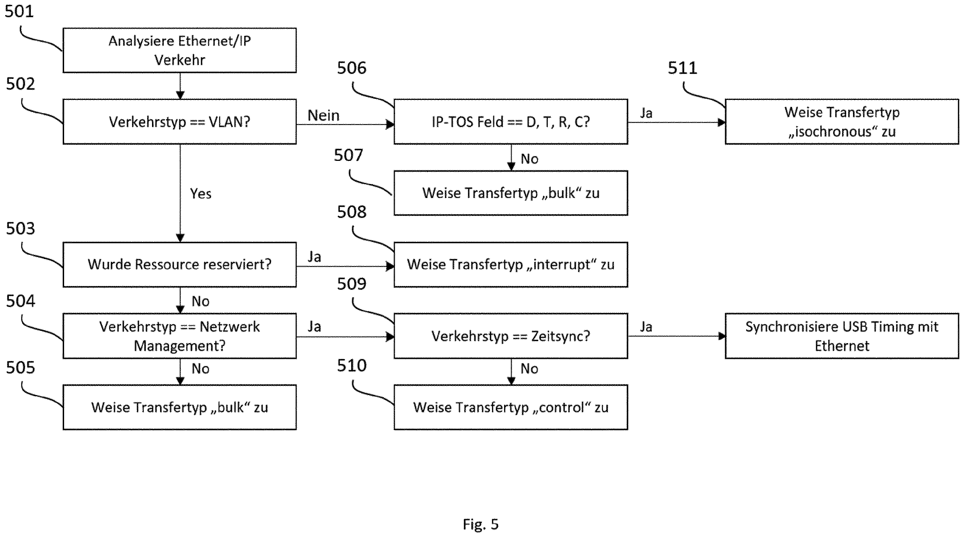

Fig. 5 zeigt ein Verfahren gemäß einem Ausführungsbeispiel, bei dem die Ethernet-Dienstgüte der USB-Dienstgüte, d.h. den USB-Transfertypen, zugeordnet wird. In 501 wird der Prozess der Analyse des Ethernet/Internet Protokoll (IP)- Datenverkehrs gestartet. In 502 wird geprüft, ob der Typ VLAN ist. Wenn nein, wird in 506 geprüft, ob das IP - TOS Feld in den Datenpakten "D", "T2", "R" oder "C" ist. Wenn ja, wird in 511 der Transfer Typ "isochronous" zugewiesen. Wenn in 506 das Ergebnis "nein" war, wird in 507 der Verkehrstyp "bulk" zugewiesen. Wenn in 502 festgestellt worden ist, dass der Typ VLAN war, dann wird in 503 geprüft, ob der Datenstrom reserviert war. Wenn ja, wird in 508 der Transfer Typ "interrupt" zugewiesen. Wenn nein, wird in 504 geprüft ob der Verkehr dem "Network Management" zugeordnet ist. Wenn ja, wird in 509 geprüft, ob der Verkehr zeitsynchronisiert ist. Wenn ja, wird in 512 das USB Timing auf das Ethernet Timing synchronisiert. Wenn in 509 festgestellt wurde, dass der Verkehr nicht zeitsynchronisiert ist, wird in 510 der Transfer-Typ "control" zugewiesen. Wurde in 504 festgestellt, dass der Verkehr nicht dem "Network Management" zugeordnet ist, dann wird in 505 der Transfer Typ "bulk" zugewiesen.

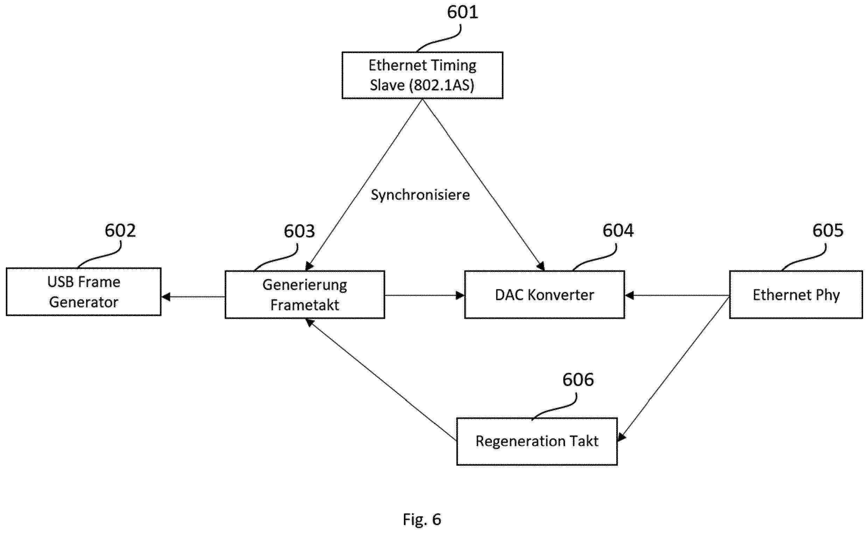

Fig. 6 zeigt ein Blockschaltbild der Zeitsynchronisation im Mediakonverter 107 gemäß einem Ausführungsbeispiel. Die Ethernet-Datenblöcke werden am Ethernet Physical Layer - Schnittstellenmodul 605 empfangen. Im Modul 606 wird der Takt der Daten regeneriert und die Datenrahmen an das Modul 603 weitergeleitet. Der Ethernet Timing Slave (802.1 AS) 601 synchronisiert auf Ethernet-Taktbasis sowohl den Rahmentakt für die USB Rahmen im Rahmentakt-Generierungsmodul 603 auf den Ethernet-Takt sowie auch den Digital Analog Konverter 604, der ebenfalls Datenblöcke vom Ethernet Physical Layer - Schnittstellenmodul 605 Daten erhält. Der USB-Rahmengenerator 602 erzeugt schließlich die USB-Datenrahmen auf Grundlage des synchronisierten Rahmentaktes.

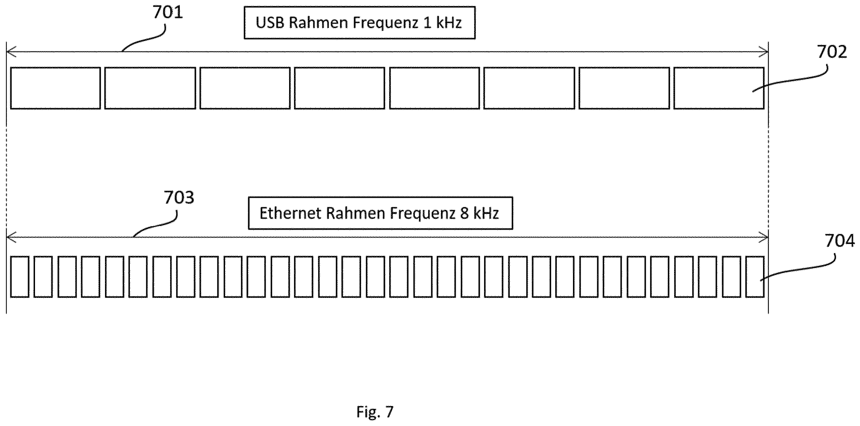

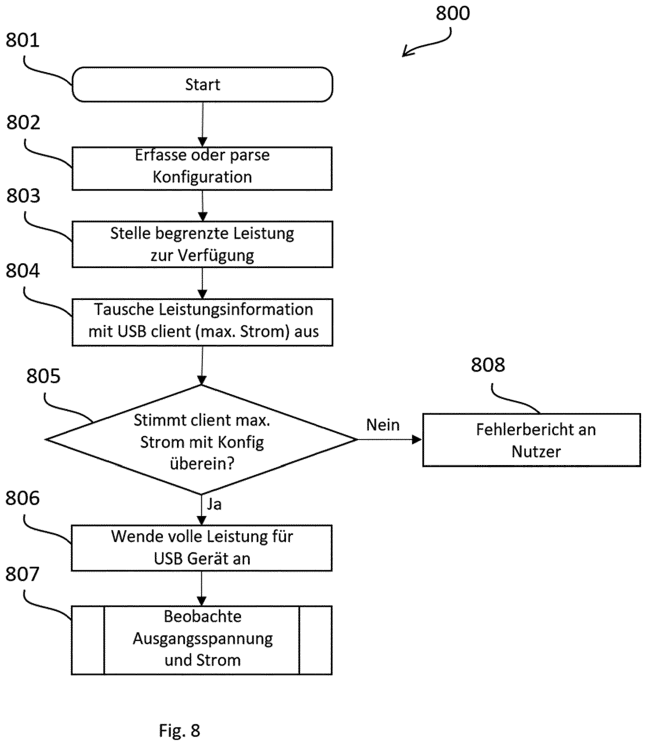

Figur 7 zeigt ein Diagramm der Zeitsynchronisation gemäß einem Ausführungsbeispiel. Ein USB Frame wird mit einer Frequenz von 1 kHz gesendet. Das Ziel des hier vorgestellten Ansatzes ist es, diesen Takt auf die Zeitsynchronisation von Ethernet einzustellen und synchron zu halten. Die USB-Rahmenfrequenz für den USB-Rahmen 701 mit den USB Datenblöcken 702 beträgt in dem Beispiel in dieser Figur 1 kHz, während die Ethernet-Rahmenfrequenz für den Ethernet-Rahmen 703 mit den Ethernet-Datenblöcken 704 in dem Beispiel in dieser Figur 8 kHz beträgt. Die Ethernet-Rahmenfrequenz kann z.B. auch 1 kHz oder 4 kHz betragen. Die USB Rahmenfrequenz wird auf die Ethernet-Rahmenfrequenz synchronisiert.

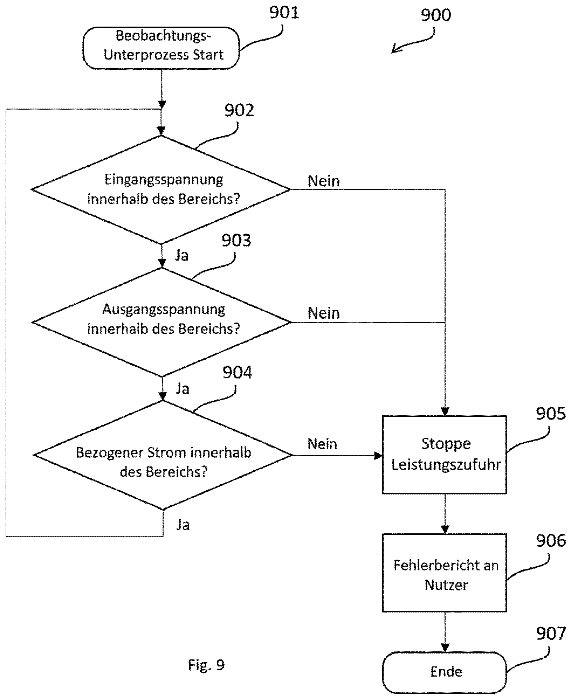

Fig. 8 zeigt den Kommunikationsablauf 800 vor dem Bereitstellen der Spannungsversorgung zum USB-Gerät, der in 801 gestartet wird, gemäß einem Ausführungsbeispiel. Im ersten Schritt 802 wird eine Konfiguration von einer externen Einheit im Fahrzeug empfangen beziehungsweise eine bereits hinterlegte Konfiguration eingelesen. Diese Konfiguration beinhaltet Informationen wie die Eingangsspannung, die bereitzustellende Ausgangsspannung sowie die maximal zulässige Stromaufnahme des USB-Gerätes. Im nächsten Schritt 803 wird das USB-Gerät zur Konfiguration mit Spannung versorgt. Die dafür bereitgestellte Stromstärke ist dabei aber noch nicht höher als 500 mA, um das Gesamtsystem vor einer zu hohen Energieaufnahme zu schützen. Im nächsten Schritt 804 wird mit dem USB-Gerät geplante Stromaufnahme ausgehandelt. Stimmt die vom USB-Gerät kommunizierte Stromaufnahme mit der in der Konfiguration maximal erlaubte Stromaufnahme überein, beziehungsweise liegt diese unter dem maximalen Wert, so wird im Schritt 806 die vom System maximal bereitgestellte Stromversorgung auf den in der Konfiguration hinterlegten maximal zulässigen Wert angepasst. Im weiteren Verlauf, im Schritt 807, werden die Ausgangsspannung und der Strom überwacht (s. Fig. 9) . Stimmt im Schritt 804 die kommunizierte Stromaufnahme nicht mit der gemäß Konfiguration maximal erlaubten Stromaufnahme überein, wird in 808 ein Fehlerbericht an den Nutzer gesendet.

Fig. 9 zeigt den Ablauf 900 der Überwachung der Spannungsversorgung gemäß einem Ausführungsbeispiel. Dabei wird die Eingangsspannung in 902 und die Ausgangsspannung in 903 daraufhin überwacht, ob sie sich innerhalb des zulässigen Werte befinden. Zudem wird in 904 der vom USB-Gerät aufgenommene Strom überwacht. Im Falle einer Überschreitung der zulässigen Grenzwerte wird die Spannungsversorgung zum Endgerät in 905 unterbrochen, um dies zu schützen. Ein Fehlerbericht wird in 906 an den Nutzer gesendet, und der Unterprozess wird schließlich in 907 beendet.

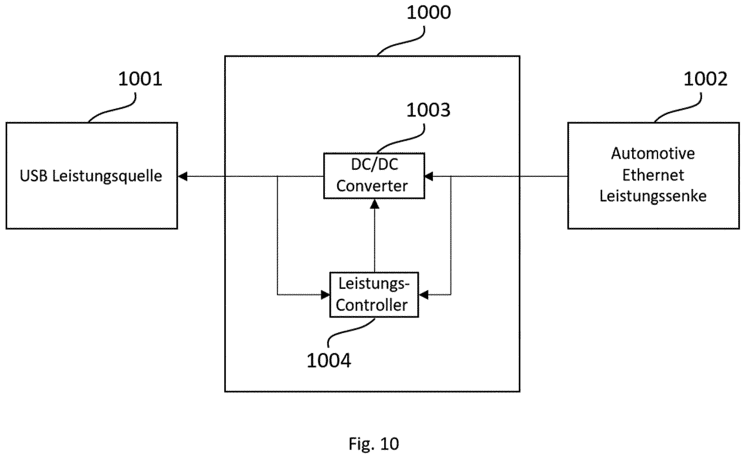

Fig. 10 zeigt das logische Blockschaltbild der Energieversorgungseinheit 1000 gemäß einem Ausführungsbeispiel. Sie verfügt über einen Gleichspannungsumsetzer (Direct Current / Direct Current, DC/DC-Konverter), der die Spannung des Fahrzeugbordnetzes 1002, üblicherweise 12 V oder 24 V, in eine für das USB Gerät passende und stabilisierte Spannung 1001 umsetzt. Die vom Fahrzeug per Leistung über Datenleitung (Power over Data Lines, PoDL) über Ethernet bereitgestellte Versorgungsspannung 1002 wird dabei von einem Controller 1004 in Bezug auf die bereitgestellte Spannung 1002 überwacht. Der Controller 1004 überwacht die für USB generierte Ausgangsspannung 1001 und den vom USB aufgenommenen Strom. Zudem ist der Controller 1004 in der Lage, die Energieversorgung zum USB Gerät vollständig zu deaktivieren. Dies kann beispielsweise auf externe Anforderungen geschehen, wie beispielsweise bei Partial-Networking.

Fig. 10 zeigt ein Fahrzeug 1100 gemäß einem Ausführungsbeispiel, das das Gateway 100 enthält.

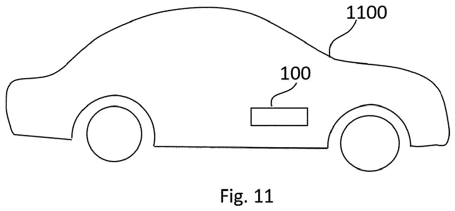

Fig. 11 zeigt ein Verfahren zur Datenkommunikation in einem Fahrzeug gemäß einem Ausführungsbeispiel, das die Schritte
- Empfangen von Daten an einer ersten Kommunikationsschnittstelle (111), die ein erstes Kommunikationsprotokoll verwendet in 1101,
- Umsetzen der Daten der Daten von einem Kommunikationsprotokoll zu einem zweiten Kommunikationsprotokoll in 1102,
- Bereitstellen der Daten an der zweiten Kommunikationsschnittstelle (112) in 1102
   aufweist.

## Patentansprüche

1. Gateway (100) zur Datenkommunikation in einem Fahrzeug, aufweisend:
- eine erste Kommunikationsschnittstelle, die ein erstes Kommunikationsprotokoll verwendet und
- eine zweite Kommunikationsschnittstelle, die ein zweites Kommunikationsprotokoll verwendet,
wobei das Kommunikationsprotokoll der ersten Kommunikationsschnittstelle (111) USB ist und das Kommunikationsprotokoll der zweiten Kommunikationsschnittstelle (112) einem Ethernet-Standard für die Fahrzeugtechnologie entspricht,
wobei das Gateway (100) konfiguriert ist, Daten von der ersten (111) zur zweiten (112) Kommunikationsschnittstelle zu übertragen und Daten von der zweiten Kommunikationsschnittstelle (112) zur ersten Kommunikationsschnittstelle (111) zu übertragen, und wobei das Gateway (100)
einen Mediakonverter (107) zum Umsetzen von Dienstgüteinformationen vom ersten in das zweite Kommunikationsprotokoll und vom zweiten in das erste Kommunikationsprotokoll umfasst,
wobei das erste Kommunikationsprotokoll mittels Zeitmarken eine zeitliche Zuordnung von Daten beinhaltet und das Gateway (100) eingerichtet ist, die Zeitmarken bei der Umsetzung der Daten vom ersten Kommunikationsprotokoll in das zweite Kommunikationsprotokoll den umgesetzten Daten zuzuweisen.

2. Gateway (100) nach Anspruch 1, weiterhin aufweisend eine Zeitsynchronisationsschaltung (105, 106), eingerichtet zur Umsetzung einer Zeitsynchronisation vom ersten Kommunikationsprotokoll auf das zweite Kommunikationsprotokoll.

3. Gateway (100) nach Anspruch 2, wobei die Zeitsynchronisationsschaltung (105, 106) eingerichtet ist, einen Übertragungstakt des ersten Kommunikationsprotokolls mit einem Übertragungstakt des zweiten Kommunikationsprotokolls zu synchronisieren.

4. Gateway nach einem der vorherigen Ansprüche, wobei die erste Schnittstelle konfiguriert ist, Daten in Datenpakete zusammenzufassen und die zweite Schnittstelle eingerichtet ist, die Datenpakete zu empfangen und zu einer weiteren Schnittstelle des ersten Kommunikationsstandards zu tunneln, und wobei das Gateway konfiguriert ist, die Laufzeit der Daten zu messen.

5. Fahrzeug mit einem Gateway (100) nach einem der Ansprüche 1-4.

6. Verfahren (1200) zur Datenkommunikation in einem Fahrzeug, aufweisend die Schritte:
- Empfangen (1201) von Daten an einer ersten Kommunikationsschnittstelle (111), die ein erstes Kommunikationsprotokoll verwendet, wobei das Kommunikationsprotokoll der ersten Kommunikationsschnittstelle (111) USB ist und wobei das erste Kommunikationsprotokoll mittels Zeitmarken eine zeitliche Zuordnung von Daten beinhaltet,
- Umsetzen (1202) von Dienstgüteinformationen vom ersten in ein zweites Kommunikationsprotokoll, wobei das Kommunikationsprotokoll der zweiten Kommunikationsschnittstelle (112) einem Ethernet-Standard für die Fahrzeugtechnologie entspricht, wobei die Zeitmarken bei der Umsetzung der Daten vom ersten Kommunikationsprotokoll in das zweite Kommunikationsprotokoll den umgesetzten Daten zugewiesen werden,
- Übertragen (1203) der Daten zu einer zweiten Kommunikationsschnittstelle (112), die das zweite Kommunikationsprotokoll verwendet.

7. Programmelement, das, wenn es auf einem Prozessor (103) eines Gateways (100) ausgeführt wird, das Gateway (100) anleitet, die Schritte gemäß Anspruch 6 durchzuführen.

8. Computerlesbares Medium, auf dem ein Programmelement nach Anspruch 7 gespeichert ist.

## Claims

1. Gateway (100) for data communication in a vehicle, having:
- a first communication interface, which uses a first communication protocol, and
- a second communication interface, which uses a second communication protocol,
the communication protocol of the first communication interface (111) being USB and the communication protocol of the second communication interface (112) corresponding to an Ethernet standard for vehicle technology,
wherein the gateway (100) is configured to transmit data from the first (111) to the second (112) communication interface and to transmit data from the second communication interface (112) to the first communication interface (111), and wherein the gateway (100)
comprises a media converter (107) for converting quality of service information from the first to the second communication protocol and from the second to the first communication protocol,
wherein the first communication protocol contains a temporal association of data by means of time stamps and the gateway (100) is set up to assign the time stamps to the converted data when converting the data from the first communication protocol to the second communication protocol.

2. Gateway (100) according to Claim 1, further having a time synchronization circuit (105, 106), set up to convert a time synchronization from the first communication protocol to the second communication protocol.

3. Gateway (100) according to Claim 2, wherein the time synchronization circuit (105, 106) is set up to synchronize a transmission clock of the first communication protocol with a transmission clock of the second communication protocol.

4. Gateway according to one of the preceding claims, wherein the first interface is configured to combine data in data packets and the second interface is set up to receive the data packets and to tunnel to a further interface of the first communication standard, and wherein the gateway is configured to measure the transfer time of the data.

5. Vehicle having a gateway (100) according to one of Claims 1-4.

6. Method (1200) for data communication in a vehicle, having the steps of:
- receiving (1201) data at a first communication interface (111), which uses a first communication protocol, the communication protocol of the first communication interface (111) being USB and the first communication protocol containing a temporal association of data by means of time stamps,
- converting (1202) quality of service information from the first to a second communication protocol, the communication protocol of the second communication interface (112) corresponding to an Ethernet standard for vehicle technology, the time stamps being assigned to the converted data when converting the data from the first communication protocol to the second communication protocol,
- transmitting (1203) the data to a second communication interface (112), which uses the second communication protocol.

7. Program element that, when executed on a processor (103) of a gateway (100), instructs the gateway (100) to perform the steps according to Claim 6.

8. Computer-readable medium on which a program element according to Claim 7 is stored.

## Revendications

1. Passerelle (100) de communication de données dans un véhicule, présentant :
- une première interface de communication qui utilise un premier protocole de communication, et
- une deuxième interface de communication qui utilise un deuxième protocole de communication,
dans laquelle le protocole de communication de la première interface de communication (111) est l'USB, et le protocole de communication de la deuxième interface de communication (112) correspond à un standard Ethernet pour la technologie de véhicule,
dans laquelle la passerelle (100) est configurée pour transmettre des données de la première (111) à la deuxième (112) interface de communication et pour transmettre des données de la deuxième interface de communication (112) à la première interface de communication (111), et
dans laquelle la passerelle (100) comprend un convertisseur de médias (107) pour convertir des informations de qualité de service du premier vers le deuxième protocole de communication et du deuxième vers le premier protocole de communication,
dans laquelle le premier protocole de communication comporte une allocation temporelle de données au moyen de marqueurs temporels, et la passerelle (100) est conçue, lors de la conversion des données du premier protocole de communication vers le deuxième protocole de communication, pour attribuer les marqueurs temporels aux données converties.

2. Passerelle (100) selon la revendication 1, présentant en outre un circuit de synchronisation temporelle (105, 106) qui est conçu pour convertir une synchronisation temporelle du premier protocole de communication vers le deuxième protocole de communication.

3. Passerelle (100) selon la revendication 2, dans laquelle le circuit de synchronisation temporelle (105, 106) est conçu pour synchroniser une fréquence d'horloge de transmission du premier protocole de communication avec une fréquence d'horloge de transmission du deuxième protocole de communication.

4. Passerelle selon l'une quelconque des revendications précédentes, dans laquelle la première interface est configurée pour regrouper des données en paquets de données, et la deuxième interface est conçue pour recevoir les paquets de données et pour les tunnelliser vers une autre interface du premier standard de communication, et dans laquelle la passerelle est configurée pour mesurer le temps de propagation des données.

5. Véhicule comprenant une passerelle (100) selon l'une quelconque des revendications 1 à 4.

6. Procédé (1200) de communication de données dans un véhicule, présentant les étapes consistant à :
- recevoir (1201) des données à une première interface de communication (111) qui utilise un premier protocole de communication, le protocole de communication de la première interface de communication (111) étant l'USB, et le premier protocole de communication comportant une allocation temporelle des données au moyen de marqueurs temporels,
- convertir (1202) des informations de qualité de service d'un premier vers un deuxième protocole de communication, le protocole de communication de la deuxième interface de communication (112) correspondant à un standard Ethernet pour la technologie de véhicule, dans lequel, lors de la conversion des données du premier protocole de communication vers le deuxième protocole de communication, les marqueurs temporels sont attribués aux données converties,
- transmettre (1203) les données à une deuxième interface de communication (112) qui utilise le deuxième protocole de communication.

7. Elément de programme qui, lorsqu'il est exécuté sur un processeur (103) d'une passerelle (100), ordonne à la passerelle (100) d'exécuter les étapes selon la revendication 6.

8. Support lisible par ordinateur sur lequel est stocké un élément de programme selon la revendication 7.
